# EUROPEAN PATENT APPLICATION

(11) **EP 3 282 105 A1**
(43) Date of publication of application: **14.02.2018**
(21) Application number: 16776589.0
(22) Date of filing: 06.04.2016
(51) Int. Cl.: F01N 3/28, B01D 53/94, B01J 35/04, F01N 3/20

(54) **CERAMIC HONEYCOMB STRUCTURAL BODY AND ELECTRICALLY HEATED CATALYST**

(30) Priority: 06.04.2015 JP 2015077746
(71) Applicant: Ibiden Co., Ltd, Ogaki-shi, Gifu 503-8604 (JP)
(72) Inventor: HASHIZUME, Yuuki, Gifu 501-0695 (JP); KOGA, Yoshihiro, Gifu 501-0695 (JP); SAKURAI, Kento, Gifu 501-0695 (JP)
(74) Representative: Hoefer & Partner Patentanwälte mbB
(86) International application number: PCT/JP2016/061304
(87) International publication number: WO 2016/163423

(57) **Abstract**

An inside cell (30) and an outside cell (30) adjacent in the radial direction of a main body (21) are arranged in a deviated state. Thus, even in a case where a temperature increases or decreases drastically, expansion or contraction does not largely occur by heat in a radial direction, and a sufficient strength can be obtained with respect to a compression force or a tensile strength. In addition, since the inside cell (30) and the outside cell (30) are arranged in a deviated state, a shortest radial route length (R1), which routes circular arc walls (31 and 32) and linear walls (33 and 34), between a center (23) and an outer wall (22) of the main body (21) is larger than an outer shell radius (R2) of the main body (21). Accordingly, an electrical conduction path becomes long, and thus a ceramic honeycomb structure can be suitably used in an exhaust emission control device (10A), for example.

## Description

### Technical Field

The present invention relates to a ceramic honeycomb structure which is suitable to support a catalyst and an electrically heated catalyst, which are used in, for example, an exhaust system of an automobile

### Background Art

In the related art, an electrically heated catalyst (EHC) has been known as an exhaust emission control device which is provided on an exhaust path of an automobile and the like and purifies an exhaust gas discharged from an engine. Such an EHC has a ceramic honeycomb structure in which the catalyst is supported and an electrode for applying a current to the ceramic honeycomb structure.

Patent Literature 1 discloses the ceramic honeycomb structure having cells that are arranged radially.

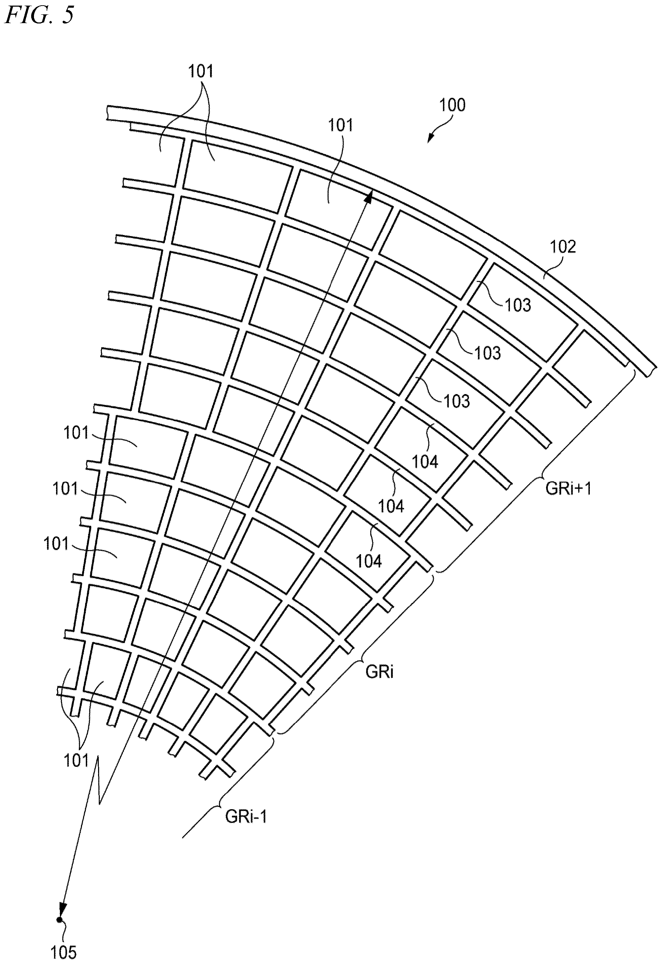

As illustrated in Fig. 5, this type of a ceramic honeycomb structure 100 has a network structure including a plurality of gas guide cells 101, and is contained inside a cylindrical outer cover 102. The gas guide cells 101 is formed as a radial cell, and is formed between a radial web 103 in a radial direction of the outer cover 102 and a tangential web 104 in parallel with a tangential direction of the outer cover 102.

The ceramic honeycomb structure 100 is formed in a cylindrical shape such that eight pieces made in a fan shape every 90 degrees are contained inside the outer cover 102. Each piece is divided into a plurality of groups GRi-1, GR, GRi+1, ... in the radial direction. In each group GR, the radial web 103 continues on a straight line in the radial direction. Incidentally, the radial webs 103 are not on a straight line between groups GR adjacent in the radial direction, and are arranged in a deviated state.

### Citation List

### [Patent Literature]

[Patent Literature 1]: JP-A-2009-532605

### Summary of the Invention

### Technical Problem

However, in the above-described ceramic honeycomb structure 100 disclosed in Patent Literature 1, in each piece, the radial web 103 continues on a straight line in the radial direction, and the tangential web 104 continues in the tangential direction (circumferential direction), thereby forming a lattice shape. Thus, a sufficient strength is not obtained with respect to a compression force or a tensile strength which acts along a diagonal direction of each cell 101.

In addition, in the contact portion of each piece, the radial web 103 continues on a straight line from a center 105 of a cylinder (outer cover 102) to the outer cover 102. Thus, an electrical conduction path in the radial direction becomes short, which is not preferable in the EHC.

The present invention has been made in consideration of the above situation, and one of objects of the present invention is to provide a ceramic honeycomb structure in which a sufficient strength can be obtained with respect to a compression force or a tensile strength generated by heat, and an electrical conduction path in a radial direction can become long, and an electrically heated catalyst.

### Solution to Problem

A ceramic honeycomb structure according to the present invention for achieving the above-described problems includes a main body including an outer wall with a cylindrical shape; and a number of cells which are partitioned inside the main body and continue along a longitudinal direction of the main body. Each cell is partitioned by a pair of circular arc walls coaxial with the outer wall and a pair of linear walls along a radial direction of the outer wall. In a section taken perpendicularly to the longitudinal direction of the main body, a shortest radial route length, which routes at least one of the circular arc wall and the linear wall, between a center of the main body and the outer wall is larger than an outer shell radius which is a cylindrical radius serving as an outer shape of the main body.

In the main body, for example, a cylindrical minimum member may be arranged in the center, and a columnar minimum member may be arranged.

That is, the center of the main body may be either hollow or solid.

According to the ceramic honeycomb structure of the present invention, a number of cells are partitioned inside the main body of the cylindrical outer wall and continue along the longitudinal direction of the main body. Each cell is partitioned by the pair of circular arc walls coaxial with the outer wall and the pair of linear walls along the radial direction of the outer wall.

In addition, the shortest radial route length, which routes at least one of the circular arc wall and the linear wall, between the center of the main body and the outer wall is longer than the outer shell radius which is the radius of the cylinder which is the outer shape of the main body. Accordingly, the electrical conduction path becomes long, and thus the ceramic honeycomb structure can be suitably used in an EHC, for example.

The ceramic honeycomb structure of the present invention desirably has following aspects.
(1) The linear wall of one of the cells adjacent in a radial direction of the main body and the linear wall of the other are arranged not to be along the same plane.
   For this reason, an inside cell and an outside cell adjacent in the radial direction of the main body are arranged in a deviated state, and the linear wall is positioned in the middle of the circular arc wall, whereby the cells are arranged not to be in a lattice shape. Accordingly, expansion or contraction does not largely occur by the heat in the radial direction even in a case where a temperature increases or decreases drastically. Thus, a sufficient strength can be obtained with respect to a compression force or a tensile strength generated by the heat, and it can be suppressed that a crack occurs.
(2) The ceramic honeycomb structure includes a first concentric layer part and a second concentric layer part which respectively have five or less concentric layers adjacent to each other in the radial direction of the main body. In each of the first concentric layer part and the second concentric layer part, the linear walls are arranged along the same plane. The linear walls in the first concentric layer part are arranged not to be along the same plane as the linear walls in the second concentric layer part.
   That is, the linear wall can continue in the same plane shape in five layers in the radial direction, but does not continue over six layers or more. For this reason, the linear wall is deviated between the first concentric layer part and the second concentric layer part. Thus, the cells are not arranged overall in the lattice shape, so that the strength is secured, and the linear walls continue to some extent, so that manufacturing is easily performed.
(3) The center of the main body is arranged with a cylindrical central cell in.
   When a wall is provided in the center, the cell may be formed in a sectionally semi-arc shape or a sectionally fan shape, may have a different size from other cell, or may have a different aspect ratio of a cell section from other cell. When the cell positioned in the center is a circular cell coaxial with a filter center, the cell easily matches with the other cells in a size or an aspect ratio.
(4) The central cell has a radius R, and a curvature of the outside circular arc wall of the concentric layer adjacent to the outside of the central cell is 1/3R. The circular arc walls on the outside of other concentric layers adjacent to the outside of the concentric layer with a radius 3R have curvatures of radii 5R, 7R, 9R, ..., (2n-1)R, sequentially.
   According to this configuration, the size and the shape of the cell can be uniformized.
(5) The concentric layer adjacent to the outside of the central cell has eight cells, and the other concentric layers adjacent to the outside of the concentric layer of the eight cells have sixteen cells, sixteen cells, and twenty-four cells, sequentially. The number of cells in another concentric layer outside the concentric layer of the twenty-four cells is the same as that of the concentric layer inside the concentric layer, or is eight more than the number of the cells of the concentric layer.
   According to this configuration, the size and the shape of the cell can be uniformized.
(6) A ratio of an opening area of cells in the concentric layer is 0.9 to 1.1, and a ratio of the opening area of each cell in the concentric layer and the opening area of each cell in another concentric layer adjacent to the outside are 0.56 to 1.8.
   According to this configuration, the size and the shape of the cell can be uniformized.

In the electrically heated catalyst of the present invention for achieving the above-described problems, the outer wall, the circular arc wall, and the linear wall in the ceramic honeycomb structure are configured by ceramics having a conductivity. The catalyst is supported on the surfaces of the circular arc wall and the linear wall. An electrical electrode is connected with the ceramic honeycomb structure.

### Advantageous Effects of the Invention

According to the ceramic honeycomb structure and the electrically heated catalyst of the present invention, the inside cell and the outside cell adjacent in the radial direction of the main body are arranged in a deviated state. Thus, even in a case where a temperature increases or decreases drastically, expansion or contraction does not largely occur by heat in the radial direction, and a sufficient strength can be obtained with respect to a compression force or a tensile strength. In addition, since the inside cell and the outside cell are arranged in a deviated state, the shortest radial route length, which routes the circular arc walls and the linear walls, between the center and the outer wall of the main body becomes large. Accordingly, the electrical conduction path becomes long, and thus the ceramic honeycomb structure can be suitably used in the electrically heated catalyst (EHC).

### Brief Description of the Drawings

Fig. 1 is a sectional view of an electrically heated catalyst (EHC) using a ceramic honeycomb structure according to a first embodiment of the present invention.
Fig. 2A is a sectional view of a main body of the ceramic honeycomb structure when sectioned in perpendicular to a longitudinal direction.
Fig. 2B is an enlarged view of a "B" portion in Fig. 2A.
Fig. 3 is an enlarged view of a "III" portion in Fig. 2B.
Fig. 4 is a view of a ceramic honeycomb structure according to a second embodiment of the present invention, similar to Fig. 2B.
Fig. 5 is an enlarged cross-sectional view of a conventional ceramic honeycomb structure.

### Description of Embodiments

The description will be given about a ceramic honeycomb structure and an electrically heated catalyst of the present invention.

The ceramic honeycomb structure of the present invention for achieving the above-described problems includes a main body having a cylindrical outer wall, and a number of cells which are partitioned inside the main body and continue in a longitudinal direction of the main body. Each cell is partitioned by a pair of circular arc walls coaxial with the outer wall and a pair of linear walls along a radial direction of the outer wall. In a section of the main body in perpendicular to the longitudinal direction, a shortest radial route length, which routes at least one of the circular arc wall and the linear wall, between a center of the main body and the outer wall is larger than an outer shell radius which is a cylindrical radius which is an outer shape of the main body.

According to the ceramic honeycomb structure of the present invention, a number of cells are partitioned inside the main body of the cylindrical outer wall and continue along the longitudinal direction of the main body. Each cell is partitioned by the pair of circular arc walls coaxial with the outer wall and the pair of linear walls along the radial direction of the outer wall.

In addition, the shortest radial route length, which routes at least one of the circular arc wall and the linear wall, between the center of the main body and the outer wall is longer than the outer shell radius which is the radius of the cylinder which is the outer shape of the main body. Accordingly, the electrical conduction path becomes long, and thus the ceramic honeycomb structure can be suitably used in an EHC, for example.

Incidentally, in the main body, for example, a cylindrical minimum member may be arranged in the center, and a columnar minimum member may be arranged.

That is, the center of the main body may be either hollow or solid.

The ceramic honeycomb structure of the present invention desirably has following aspects.
(1) The linear wall in one cell and the linear wall in another cell among the cells adjacent in the radial direction of the main body are arranged not to be along the same plane.
   According to this configuration, an inside cell and an outside cell adjacent in the radial direction of the main body are arranged in a deviated state, and the linear wall is positioned in the middle of the circular arc wall, whereby the cells are arranged not to be in a lattice shape. Accordingly, expansion or contraction does not largely occur by the heat in the radial direction even in a case where a temperature increases or decreases drastically. Thus, a sufficient strength can be obtained with respect to a compression force or a tensile strength generated by the heat, and it can be suppressed that a crack occurs.
(2) The ceramic honeycomb structure includes a first concentric layer part and a second concentric layer part, each of which has five or less concentric layers adjacent to each other in the radial direction of the main body. In each of the first concentric layer part and the second concentric layer part, the linear walls are arranged along the same plane. The linear walls in the first concentric layer part are arranged not to be along the same plane as the linear walls in the second concentric layer part.
   That is, the linear wall can continue in the same plane shape in five layers in the radial direction, but does not continue over six layers or more. For this reason, the linear wall is deviated between the first concentric layer part and the second concentric layer part. Thus, the cells are not arranged overall in the lattice shape, so that the strength is secured, and the linear walls continue to some extent, so that manufacturing is easily performed.
(3) The ceramic honeycomb structure has a cylindrical central cell in the center of the main body.
   When a wall is provided in the center, the cell may be formed in a sectionally semi-arc shape or a sectionally fan shape, may have a different size from other cell, or may have a different aspect ratio of a cell section from other cell. When the cell positioned in the center is a circular cell coaxial with a filter center, the cell easily matches with the other cells in a size or an aspect ratio.
(4) The central cell has a radius R, and a curvature of the outside circular arc wall of the concentric layer adjacent to the outside of the central cell is 1/3R. The outside circular arc walls of other concentric layers adjacent to the outside of the concentric layer with a radius 3R have curvatures of radii 5R, 7R, 9R, ..., (2n-1)R, sequentially.
   According to this configuration, the size and the shape of the cell can be uniformized.
(5) The concentric layer adjacent to the outside of the central cell has eight cells, and the other concentric layers adjacent to the outside of the concentric layer of the eight cells have sixteen cells, sixteen cells, and twenty-four cells, sequentially. The number of cells in another concentric layer outside the concentric layer of the twenty-four cells is the same as that of the concentric layer inside the concentric layer, or is eight more than the number of the cells of the concentric layer.
   According to this configuration, the size and the shape of the cell can be uniformized.
(6) A ratio of an opening area of cells in the concentric layer is 0.9 to 1.1, and a ratio of the opening area of each cell in the concentric layer and the opening area of each cell in another concentric layer adjacent to the outside are 0.56 to 1.8.
   According to this configuration, the size and the shape of the cell can be uniformized.

In the electrically heated catalyst of the present invention for achieving the above-described problems, the outer wall, the circular arc wall, and the linear wall in the ceramic honeycomb structure are configured by ceramics having a conductivity. The catalyst is supported on the surfaces of the circular arc wall and the linear wall. An electrical electrode is connected with the ceramic honeycomb structure.

### (First embodiment)

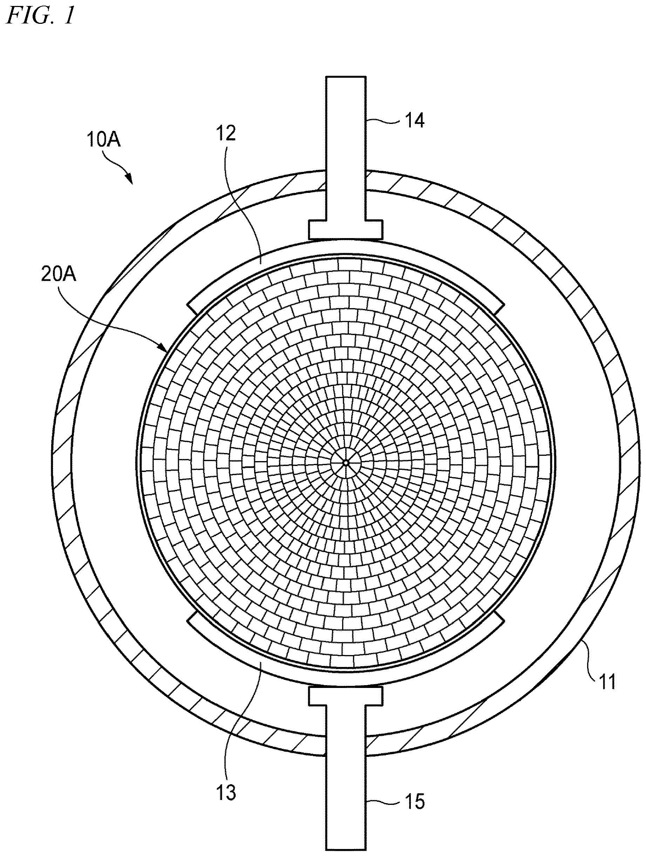

Fig. 1 illustrates an exhaust emission control device 10A.

The exhaust emission control device 10A is an electrically heated catalyst (hereinafter, referred to as an "EHC".) which is provided on an exhaust path of an automobile and the like and purifies an exhaust gas discharged from an engine.

The exhaust emission control device 10A includes a hollow case 11 as an exterior, a ceramic honeycomb structure 20A contained in the case 11, electrodes 12 and 13 which are provided in an outer circumferential surface of the ceramic honeycomb structure 20A, and terminals 14 and 15 which are electrically connected to the electrodes 12 and 13, respectively.

The case 11 serves as a member which is a portion of an exhaust pipe through which the exhaust gas discharged from the engine flows as well as an exterior of the exhaust emission control device 10A, and is formed in a substantially cylindrical shape.

The ceramic honeycomb structure 20A is a porous member which is made of ceramics such as SiC (silicon carbide) or cordierite and has a honeycomb structure, and a catalyst such as platinum or palladium is supported thereon.

The ceramic honeycomb structure 20A is formed in a cylindrical shape which has an outer diameter slightly smaller than the inner diameter of the case 11. The inside of the case 11 is arranged to have a predetermined gap from the inner circumferential surface of the case 11 (such a gap that an inner circumferential surface of the case 11 and the electrodes 12 and 13 are not contact with each other). Further, the ceramic honeycomb structure 20A is arranged such that the exhaust gas discharged from the engine passes through the inside of the ceramic honeycomb structure 20A in an axial direction.

Incidentally, between the inner circumferential surface of the case 11 and the outer circumferential surface of the ceramic honeycomb structure 20A, a holding member (not illustrated) made of alumina and the like is provided to prevent position deviation of the ceramic honeycomb structure 20A and to seal the gap between the inner circumferential surface of the case 11 and the outer circumferential surface of the ceramic honeycomb structure 20A.

Such an exhaust emission control device 10A electrically heats the ceramic honeycomb structure 20A between the electrodes 12 and 13 by using a power supply, and raises a temperature of the catalyst supported on the ceramic honeycomb structure 20A to an active temperature. Accordingly, a harmful material such as HC (unburned hydrocarbon), CO (carbon monoxide), and NOx (nitrogen oxide) in the exhaust gas which is discharged from the engine to passes through the ceramic honeycomb structure 20A is purified by a catalyst reaction.

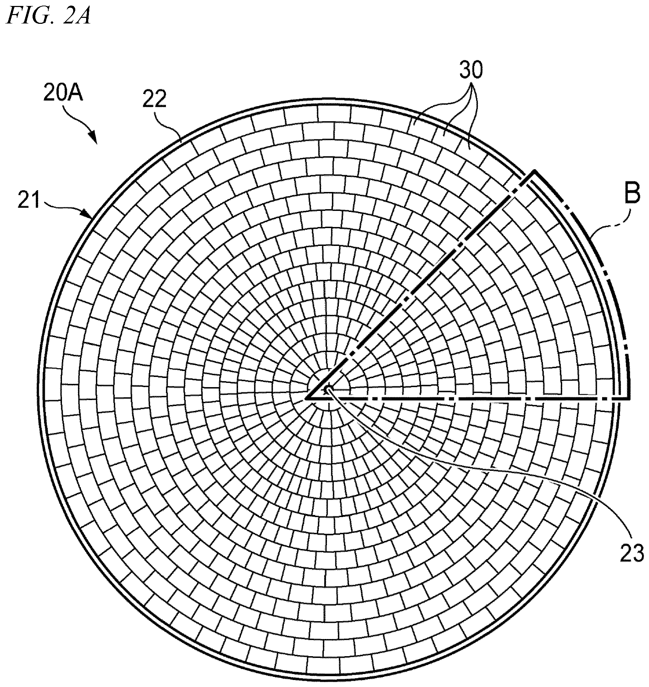

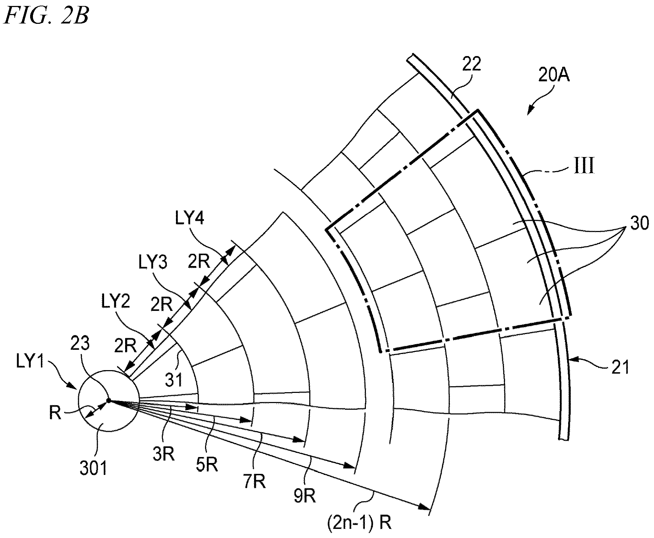

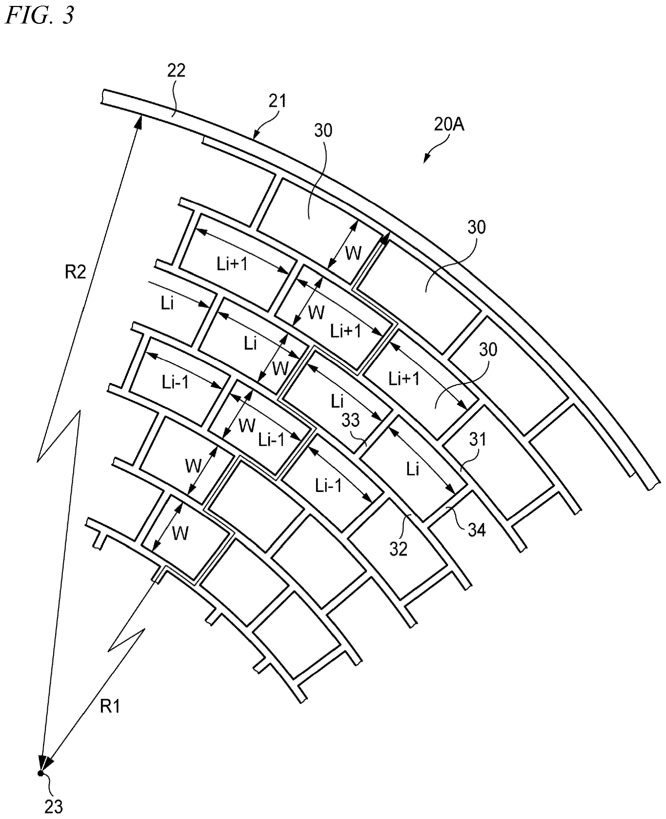

As illustrated in Figs. 2A and 2B, the ceramic honeycomb structure 20A has the main body 21 including the outer wall 22 with a cylindrical shape. A number of cells 30 which are partitioned in a sectional direction of the main body 21, and continue in the longitudinal direction (in a direction perpendicular to the sheet of Figs. 2A and 2B) of the main body 21 are contained in the main body 21. Each cell 30 is partitioned by a pair of circular arc walls 31 and 32 coaxial with the outer wall 22 and a pair of linear walls 33 and 34 along the radial direction of the outer wall 22 (see Fig. 3).

A central cell 301 of the radius R is arranged as a reference cell in the center 23 of the main body 21. The central cell 301 has a cylindrical shape and has no wall (partition) therein. A number of concentric layers LYn are provided outside the central cell 301.

Accordingly, the center 23 of the main body 21 becomes hollow.

The outside circular arc wall 31 of a concentric layer LY2 adjacent to the outside of the central cell 301 has a curvature of 1/3R with the center 23 set as a center. Further, in other concentric layers LYn adjacent to the outside of the concentric layer LY2 of the radius 3R, the outside circular arc walls 31 have curvatures of radii 5R, 7R, 9R, ..., (2n-1)R, sequentially.

The concentric layer LY2 adjacent to the outside of the central cell 301 has eight cells, and the other concentric layers LYn adjacent to the outside of the concentric layer LY2 of the eight cells have sixteen cells, sixteen cells, and twenty-four cells, sequentially. The number of the cells of another concentric layer LYn+1 outside the concentric layer LYn of the twenty-four cells is the same as that of the concentric layer LYn inside the concentric layer LYn+1, or is eight more than the number of the cells of the concentric layer LYn.

Herein, the ratio of the opening area of two certain cells 30 in the concentric layer LYn is desirably 0.9 to 1.1.

In addition, the ratio of the opening area of each cell 30 in the concentric layer LYn and the opening area of each cell 30 of another concentric layer LYn+1 adjacent to the outside is desirably 0.56 to 1.8.

As illustrated in Fig. 3, the cell 30 has a partially circular arc (fan) shape with a constant width.

Incidentally, the width W of the cell 30 in the radial direction, that is, the length of the linear walls 33 and 34 is constant, and, for example, can be satisfied that W=2·R as described above. In addition, on the same concentric circle, the length L (Li) of the cell 30 in the circumferential direction has a constant length. The length L can be calculated from the radius of the concentric layer LYn and the number of the cells.

The linear walls 33 and 34 in one cell 30 and the linear walls 33 and 34 in another cell 30 among the cells 30 adjacent in the radial direction of the main body 21 are arranged not to be along the same plane. That is, the linear walls 33 and 34 of the cells 30 adjacent in the radial direction are arranged in a deviated state in the circumferential direction, and are arranged as a so-called break joint. The break joint means such a joint that the connection in a vertical (perpendicular) direction is dislocated one by one by stonework, brickwork, or the like. Generally, the break joint is excellent in strength compared to straight joint arranged on a straight line.

A shortest radial route length R1, which routes the circular arc walls 31 and 32 and the linear walls 33 and 34, between the center 23 and the outer wall 22 of the main body 21 is larger than an outer shell radius R2 which connects the center 23 and the outer wall 22 of the main body 21 and is a radius of the cylinder as the outer shape.

That is, the shortest radial route length R1 is obtained by adding the length (corresponding to the outer shell radius R2), which corresponds to the deviation of the linear walls 33 and 34, of the circular arc walls 31 and 32 to the length, which connects the center 23 and the outer wall 22 of the main body 21, of the linear walls 33 and 34. The shortest radial route length R1 is larger than the outer shell radius R2.

Next, the description will be given about the operation and the effect of the ceramic honeycomb structure of this embodiment.

According to the ceramic honeycomb structure 20A of this embodiment, in the main body 21 having the cylindrical outer wall 22, a number of cells 30 are partitioned, and continue in the longitudinal direction of the main body 21. Each cell 30 is partitioned by the pair of circular arc walls 31 and 32 coaxial with the outer wall 22 and the pair of linear walls 33 and 34 along the radial direction of the outer wall 22. In addition, the shortest radial route length, which routes the circular arc walls 31 and 32 and the linear walls 33 and 34, between the center 23 and the outer wall 22 of the main body 21 is larger than the outer shell radius which is the radius of the cylinder as the outer shape of the main body 21.

Accordingly, the electrical conduction path becomes long, and thus the ceramic honeycomb structure can be suitably used in, for example, an EHC.

According to the ceramic honeycomb structure 20A of this embodiment, the linear walls 33 and 34 in one cell 30 and the linear walls 33 and 34 in another cell 30 among the cells 30 adjacent in the radial direction of the main body 21 are arranged not to be along the same plane.

According to this configuration, the inside cell 30 and the outside cell 30 adjacent in the radial direction of the main body 21 are arranged in a deviated state, and the linear walls 33 and 34 are positioned in the middle of the circular arc walls 31 and 32, whereby the cells 30 are arranged not to be in a lattice shape. Accordingly, expansion or contraction does not largely occur by the heat in the radial direction even in a case where a temperature increases or decreases drastically. Thus, a sufficient strength can be obtained with respect to a compression force or a tensile strength generated by the heat, and it can be suppressed that a crack occurs.

According to the ceramic honeycomb structure 20A of this embodiment, the ceramic honeycomb structure has the cylindrical central cell 301 in the center of the main body 21.

When the wall is provided in the center, the central cell 301 may be formed in a sectionally semi-arc shape or a sectionally fan shape, may have a different size from other cell 30, or may have a different aspect ratio of a cell section from other cell. When the central cell 301 positioned in the center is a circular cell coaxial with the center of the filter, the central cell 301 easily matches with other cells in a size or an aspect ratio.

According to the ceramic honeycomb structure 20A of this embodiment, the central cell 301 is the radius R, and the curvature of the outside circular arc wall 31 of the concentric layer LY2 adjacent to the outside of the central cell 301 is 1/3R. Further, the outside circular arc walls 31 of other concentric layers LYn adjacent to the outside of the concentric layer LY2 with the radius 3R have curvatures of radii 5R, 7R, 9R, ..., (2n-1)R, sequentially.

According to this configuration, the size and the shape of the cell 30 can be uniformized.

According to the ceramic honeycomb structure 20A of this embodiment, the concentric layer LY2 adjacent to the outside of the central cell 301 has eight cells, and the other concentric layers LYn adjacent to the outside of the concentric layer LY2 of the eight cells have sixteen cells, sixteen cells, and twenty-four cells, sequentially. The number of the cells of another concentric layer LYn+1 outside the concentric layer LYn of the twenty-four cells is the same as that of the concentric layer LYn inside the concentric layer LYn+1, or is eight more than the number of the cells of the concentric layer LYn.

According to this configuration, the size and the shape of the cell 30 can be uniformized.

According to the ceramic honeycomb structure 20A of this embodiment, the ratio of the opening area of the cells 30 in the concentric layer LYn is 0.9 to 1.1.

That is, the ratio of the opening area of two certain cells 30 in the same concentric layer LYn is 0.9 to 1.1, and thus the size and the shape of the cell 30 can be uniformized.

According to the ceramic honeycomb structure 20A of this embodiment, the ratio of the opening area of each cell 30 in the concentric layer LYn and the opening area of each cell 30 in another concentric layer LYn+1 adjacent to the outside is 0.56 to 1.8.

According to this configuration, the size and the shape of the cell 30 can be uniformized.

### (Second embodiment)

Next, the description will be given about the ceramic honeycomb structure of the second embodiment.

In the following description for the second embodiment, common portions to the above-described ceramic honeycomb structure 20A of the first embodiment are denoted by the same reference numerals, and the redundant explanation is not repeated.

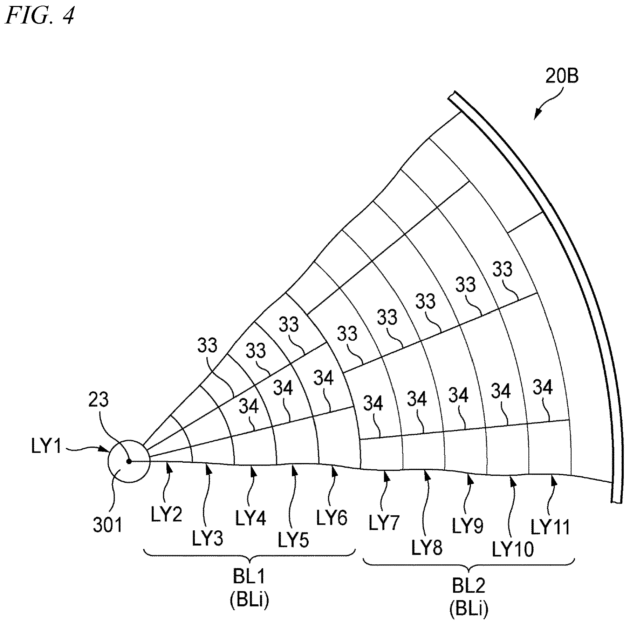

As illustrated in Fig. 4, a ceramic honeycomb structure 20B has a plurality of concentric layer parts BLi, each of which has a plurality of concentric layers LYn in the radial direction of the main body 21. Among two concentric layer parts BLi adjacent to each other, the concentric layer part on the center 23 side is set as a first concentric layer part BL1, and the concentric layer part on the outside is set as a second concentric layer part BL2. Both the first concentric layer part BL1 and the second concentric layer part BL2 have the five or less concentric layers LYn.

In each concentric layer part BLi of the first concentric layer part BL1 and the second concentric layer part BL2, the linear walls 33 and 34 of the cells 30 are arranged along the same plane. That is, in the same concentric layer part BLi, the linear walls 33 and 34 continue in the radial direction.

Further, in the first concentric layer part BL1 and the second concentric layer part BL2, the linear walls 33 and 34 in the first concentric layer part BL1 and the linear walls 33 and 34 in the second concentric layer part BL2 are arranged not to be along the same plane.

Next, the description will be given about the operation and the effect of the ceramic honeycomb structure 20B of this embodiment.

The ceramic honeycomb structure 20B of this embodiment includes the first concentric layer part BL1 and the second concentric layer part BL2, each of which has five or less concentric layers LYn adjacent to each other in the radial direction of the main body 21. In each of the first concentric layer part BL1 and the second concentric layer part BL2, the linear walls 33 and 34 are arranged along the same plane. The linear walls 33 and 34 in the first concentric layer part BL1 and the linear walls 33 and 34 in the second concentric layer part BL2 are arranged not to be along the same plane.

That is, the linear walls 33 and 34 can continue in the same plane shape in five layers in the radial direction, but does not continue over six layers or more. For this reason, the linear walls 33 and 34 are deviated between the first concentric layer part BL1 and the second concentric layer part BL2. Thus, the cells 30 are not arranged overall in the lattice shape, so that the strength is secured, and the linear walls 33 and 34 continue to some extent, so that manufacturing is easily performed.

The ceramic honeycomb structure and the electrically heated catalyst of the present invention are not limited to the above-described embodiments, and may be changed and modified properly.

The present application is based on Japanese Patent Application No. 2015-077746 filed on April 6, 2015. The contents thereof are incorporated hereinto by reference.

### Industrial Applicability

The ceramic honeycomb structure and the electrically heated catalyst of the present invention can be used as a catalyst carrier in an exhaust emission control device of an automobile, for example.

### Reference Signs List

10A: exhaust emission control device (electrically heated catalyst)
20A, 20B: ceramic honeycomb structure
21: main body
22: outer wall
23: center
30: cell
301: central cell
31, 32: circular arc wall
33, 34: linear wall
BLi: concentric layer part
BL1: first concentric layer part
BL2: second concentric layer part
LY1 to LY 11: concentric layer
R1: shortest radial route length
R2: outer shell radius

## Claims

1. A ceramic honeycomb structure comprising:
a main body including an outer wall having a cylindrical shape; and
a plurality of cells which are partitioned inside the main body and continue along a longitudinal direction of the main body,
wherein each of the cells is partitioned by a pair of circular arc walls coaxial with the outer wall and a pair of linear walls along a radial direction of the outer wall, and
wherein in a section taken perpendicularly to the longitudinal direction of the main body, a shortest radial route length, which routes at least one of the circular arc wall and the linear wall, between a center of the main body and the outer wall is larger than an outer shell radius which is a cylindrical radius serving as an outer shape of the main body.

2. The ceramic honeycomb structure according to claim 1,
wherein the linear wall of one of the cells adjacent in a radial direction of the main body and the linear wall of the other are arranged not to be along the same plane.

3. The ceramic honeycomb structure according to claim 1 further comprising:
a first concentric layer part and a second concentric layer part which respectively have five or less concentric layers adjacent to each other in the radial direction of the main body,
wherein each of the first concentric layer part and the second concentric layer part has linear walls arranged along the same plane, and
wherein the linear walls in the first concentric layer part are arranged not to be along the same plane as the linear walls in the second concentric layer part.

4. The ceramic honeycomb structure according to claim 3,
wherein the center of the main body is arranged with a cylindrical central cell.

5. The ceramic honeycomb structure according to claim 4,
wherein the central cell has a radius R,
wherein a curvature of an outside circular arc wall of the concentric layer adjacent to an outside of the central cell is 1/3R, and
wherein the circular arc walls on the outside of other concentric layers adjacent to an outside of the concentric layer with a radius 3R have curvatures of radii 5R, 7R, 9R, ..., (2n-1)R, sequentially.

6. The ceramic honeycomb structure according to claim 4 or 5,
wherein the concentric layer adjacent to the outside of the central cell has eight cells,
wherein the other concentric layers adjacent to the outside of the concentric layer of the eight cells have sixteen cells, sixteen cells, and twenty-four cells, sequentially, and
wherein he number of cells in another concentric layer outside the concentric layer of the twenty-four cells is the same as that of the concentric layer inside the concentric layer, or is eight more than the number of the cells of the concentric layer.

7. The ceramic honeycomb structure according to any one of claims 3 to 6,
wherein a ratio of an opening area of cells in the concentric layer is 0.9 to 1.1, and a ratio of the opening area of each cell in the concentric layer and the opening area of each cell in another concentric layer adjacent to the outside are 0.56 to 1.8.

8. An electrically heated catalyst having the ceramic honeycomb structure according to any one of claims 1 to 6,
wherein the outer wall, the circular arc wall, and the linear wall of the ceramic honeycomb structure are configured by ceramics having a conductivity,
wherein a catalyst is supported on surfaces of the circular arc wall and the linear wall, and
wherein an electrical electrode is connected with the ceramic honeycomb structure.
